(19) **Europäisches Patentamt**

**European Patent Office**

**Office européen des brevets**

(11) **EP 1 703 463 A1**

(12) **EUROPEAN PATENT APPLICATION**
published in accordance with Art. 158(3) EPC

(43) Date of publication:
**20.09.2006 Bulletin 2006/38**

(51) Int Cl.:
***G06T 7/00*** *(2006.01)*

(21) Application number: **04817132.6**

(22) Date of filing: **08.11.2004**

(86) International application number:
**PCT/JP2004/016522**

(87) International publication number:
**WO 2005/052859 (09.06.2005 Gazette 2005/23)**

(84) Designated Contracting States:
**DE FR GB**

(30) Priority: **28.11.2003 JP 2003399072**

(71) Applicant: **MATSUSHITA ELECTRIC INDUSTRIAL CO., LTD.**
**Kadoma-shi, Osaka 571-8501 (JP)**

(72) Inventors:
• **FUJIMATSU, Takeshi**
**Yokohama-shi,**
**Kanagawa 246-0015 (JP)**

• **AOKI, Yoshito**
**Yokohama-shi,**
**Kanagawa 225-0002 (JP)**

(74) Representative: **Grünecker, Kinkeldey,**
**Stockmair & Schwanhäusser**
**Anwaltssozietät**
**Maximilianstrasse 58**
**80538 München (DE)**

(54) **EYE IMAGE INPUT UNIT, AUTHENTICATION EQUIPMENT AND IMAGE PROCESSING METHOD**

(57)     The eye image pickup device of the present invention includes an eye image pickup unit for capturing an eye image, a display image formation unit for forming a display image almost too low in quality to be used for authentication by degrading an at least iris-containing area in the eye image, and a display unit for displaying the display image.

## FIG. 2

EP 1 703 463 A1

**Description**

TECHNICAL FIELD

The present invention relates to an eye image pickup device for capturing eye images, an authentication device using the device, an image processing method and a program.

BACKGROUND ART

In recent years, as means for authentication to access high-security systems such as room entry control systems and information devices storing personal and other important information, a variety of authentication methods have been put in practice by using what is called biometrics information. Biometrics information is unique to the user to be authenticated, such as a fingerprint, iris pattern, blood vessel pattern on the back of the eye, facial feature, blood vessel pattern of the arm, etc.

Of these authentication methods, a method using the uniqueness of the iris fold pattern of the eye (hereinafter, the "iris recognition method") has been put into practice in extremely high security devices because of its high reliability including a high genuine acceptance rate and a low false acceptance rate (see, e.g. Japanese Patent No. 3307936).

The iris recognition method authenticates the user by selectively encoding an iris area in his/her eye image, and then comparing and collating the obtained information as authentication information with registered authentication information which has been previously registered. When a match is determined, the user is authenticated as a registered user.

Such iris recognition method has been used in a variety of authentication devices. One such example is an authentication device (See, e.g. Japanese Patent Unexamined Publication No. 2000-207536) in which a hand-held eye image pickup device with a camera to photograph eye images of the user to be authenticated is externally connected to an information device such as a computer, and the eye images from the eye image pickup device are encoded and then compared and collated by the information device so as to authenticate the user.

In such an authentication device, the user's eye image containing a clear iris area is obtained as follows. An eye image that the user is capturing with the eye image pickup device is displayed on the display unit of the information device for the purpose of guiding the user. While looking at the eye image displayed on the display unit, the user moves the eye image pickup device to an appropriate position to photograph his/her eye image.

However, in this authentication device in which the eye image that the user is capturing with the eye image pickup device is displayed on the screen of the information device, the displayed eye image is in danger of being stolen by being copied with Print Screen or by other ways.

If the eye image is stolen, this may cause so-called "identity theft" in which a third person who has stolen the eye image can be authenticated as a registered user.

SUMMARY OF THE INVENTION

The present invention has been contrived in view of this problem, and has an object of providing a high-security eye image pickup device which has a low risk of so-called "identity theft" even if an image displayed on the display unit is stolen, an authentication device using the device, an image processing method and a program.

An eye image pickup device according to the present invention comprises: an eye image pickup unit for capturing an eye image; a display image formation unit for forming a display image from the eye image by degrading an at least iris-containing area in the eye image; and a display unit for displaying the display image formed by the display image formation unit.

This structure can provide a high-security eye image pickup device in which there is a low risk of someone impersonating a legitimate user even if he/she steals a display image on the display unit because the image of the iris-containing area in the display image is degraded.

An authentication device according to the present invention comprises: the eye image pickup device according to claim 1; an authentication information formation unit for forming authentication information from the eye image of a user to be authenticated entered from the eye image pickup unit; and an authentication unit for authenticating the user by comparing and collating the authentication information with registered authentication information which has been registered previously.

This structure can provide a high-security authentication device in which there is a low risk of someone impersonating a legitimate user even if he/she steals a display image on the display unit because the image of the iris-containing area in the display image is degraded.

The display image formation unit may form a display image used for guiding the user about an eye position; and the authentication information formation unit may form the authentication information from the eye image of the user, the eye image being guided to one of a specified position and a specified region by the display image on the display unit.

This structure makes it possible to degrade the image of the iris-containing area in the display image for guiding the user about the eye position. Consequently, the chance of preventing an unauthorized person from being authenticated as a legitimate user increases even if he/she makes a duplicate of the display image and uses it for authentication. This provides high security to the authentication device which guides the user by displaying a display image on the display unit.

The authentication device may further comprise: an authentication information registration unit for registering, as registered authentication information, the authentication information formed from the eye image of the user, wherein the display image formation unit forms a display image for determining whether the eye image of the user should be registered or not; and the authentication information registration unit registers the authentication information as the registered authentication information after the display image formed by the display image formation unit is displayed on the display unit.

This structure can provide high security to the authentication device in which a display image for the checking is displayed before registering the authentication information formed from the eye image of the user as registered authentication information.

The display image formation unit may form the display image by selectively applying an image process to the at least iris-containing area in the eye image.

This structure can reduce the whole amount of calculation so as to reduce the device cost and to accelerate the calculation time by selectively applying an image process to the at least iris-containing area which is needed for the formation of authentication information.

The authentication information formation unit may comprise: an eye position detection unit for detecting an eye position from the eye image; and an eyelid position detection unit for detecting an eyelid position from the eye image; and the display image formation unit determines the at least iris-containing area in the eye image from the eye position and the eyelid position, and selectively performs the image process.

This structure makes it possible to cut out the at least iris-containing area from an eye image by utilizing the information about the eye position and the eyelid position which is used when the authentication device forms authentication information from the eye image, and then to selectively process the at least iris-containing area. As a result, it becomes unnecessary to perform eye position detection or eyelid position detection, thereby simplifying the device and accelerating the process.

The display image formation unit may form a display image by subjecting the eye image to compression.

This structure can provide high security to the authentication device in which frauds such as identity theft can be prevented even if the eye image is copied, e.g. with Print Screen.

The compression may be JPEG compression.

This structure makes it possible to form a high-security display image which can be used for guiding the user about the eye position, and still which is almost too low in quality to be used for authentication due to a well-known compression algorithm.

The display image formation unit may form a display image by reducing the number of pixels composing the eye image.

This structure can also provide high security to the authentication device in which frauds such as identity theft can be prevented even if the eye image is copied, e.g. with Print Screen.

The display image formation unit may form a display image by adding specified noise to the eye image.

This structure can also provide high security to the authentication device in which frauds such as identity theft can be prevented even if the eye image is copied, e.g. with Print Screen.

The display image formation unit may form a display image by subjecting the eye image to at least two image processes out of reducing the number of pixels composing the eye image, compressing the eye image, and adding specified noise to the eye image.

This structure makes it possible to form a display image which can prevent frauds such as identity theft even if it is copied, e.g. with Print Screen, and still which can look natural to the user.

The display image formation unit may form a display image by replacing the at least iris-containing area in the eye image with a specified image.

This structure can also provide high security to the authentication device which has a low risk of fraud such as identity theft even if the eye image is copied, e.g. with Print Screen.

The authentication device may further comprise: an image quality determination unit for determining whether an eye image captured by the eye image pickup unit is adequate in quality or not, wherein the authentication information formation unit forms the authentication information of an eye image which has been determined to be adequate in quality by the image quality determination unit.

This structure makes it possible to form authentication information which can provide a high genuine acceptance rate because the authentication information can be formed by selecting an eye image adequate in quality from all eye images of the user.

An authentication device according to the present invention comprises: an eye image pickup unit for capturing an eye image of a user to be authenticated; an authentication information formation unit for forming authentication information of the eye image of the user; an authentication information registration unit for registering the authentication information as registered authentication information; authentication unit for authenticating the user by comparing and collating the authentication information with registered authentication information which has been registered previously; display image formation unit for forming a display image by degrading an at least iris-containing area in the eye image; and a display unit for displaying the display image, wherein the display image formation unit forms the display image and makes the display unit display the display image at least one of when the user is guided and when the authentication information registration unit registers the authentication information as the registered authentication information.

This structure can provide high security to the authentication device since it uses a display image which has a low risk of fraud such as identity theft, even if it is copied with Print Screen or by other ways either when the user is guided or when authentication information is registered as registered authentication information.

An image processing method according to the present invention comprises: a first step of cutting out an at least iris-containing area from an eye image; and a second step of selectively degrading an image of the iris-containing area cut out in the first step.

This method can provide a high-security image processing method in which there is a low risk of someone impersonating a legitimate user even if he/she steals a display image, because the image of the iris-containing area in the display image is degraded.

A program according to the present invention for making a computer execute: a first step of cutting out an at least iris-containing area from an eye image; and a second step of selectively degrading an image of the iris-containing area cut out in the first step.

This program can provide a program to perform a high-security image process in which there is a low risk of someone impersonating a legitimate user to be authenticated even if he/she steals a display image because the image of the iris-containing area in the display image is degraded.

As described hereinbefore, the present invention can provide a high-security eye image pickup device, an authentication device, an image processing method and a program in which there is a low risk of someone impersonating a legitimate user even if he/she steals a display image displayed on the display unit, because the image of the iris-containing area in the display image is so degraded as not to be used for authentication.

BRIEF DESCRIPTION OF THE DRAWINGS

Fig. 1 shows the outline of an authentication system according to a first embodiment of the present invention.
Fig. 2 shows a block diagram of the structure of authentication device 1 according to the first embodiment of the present invention.
Fig. 3 shows a flowchart depicting the process steps of authentication device 1 according to the first embodiment of the present invention.
Fig. 4 shows an example of the display image in the first embodiment of the present invention.
Fig. 5 shows another example of the display image in the first embodiment of the present invention.
Fig. 6 shows further another example of the display image in the first embodiment of the present invention.
Fig. 7 shows further another example of the display image in the first embodiment of the present invention.
Fig. 8 shows an outer appearance of a mobile phone device provided with an authentication function in the first embodiment of the present invention.
Fig. 9 shows the concept of an authentication system according to a second embodiment of the present invention.
Fig. 10 is a block diagram showing the structure of authentication system according to the second embodiment of the present invention.
Fig. 11 shows a flowchart depicting the operating steps of the authentication system according to the second embodiment of the present invention.
Fig. 12 shows a block diagram of the structure of an authentication system according to a third embodiment of the present invention.
Fig. 13 shows an example of the display image in the third embodiment of the present invention.
Fig. 14 shows another example of the display image in the third embodiment of the present invention.
Fig. 15 shows further another example of the display image in the third embodiment of the present invention.
Fig. 16 shows a block diagram of the structure of an authentication system according to a fourth embodiment of the present invention.
Fig. 17 shows a block diagram of the structure of an authentication system according to a fifth embodiment of the present invention.

## DETAILED DESCRIPTION OF PREFERRED EMBODIMENTS

The embodiments of the present invention will be described as follows with reference to accompanying drawings.

### FIRST EXEMPLARY EMBODIMENT

First of all, an authentication system according to a first embodiment of the present invention will be described as follows.

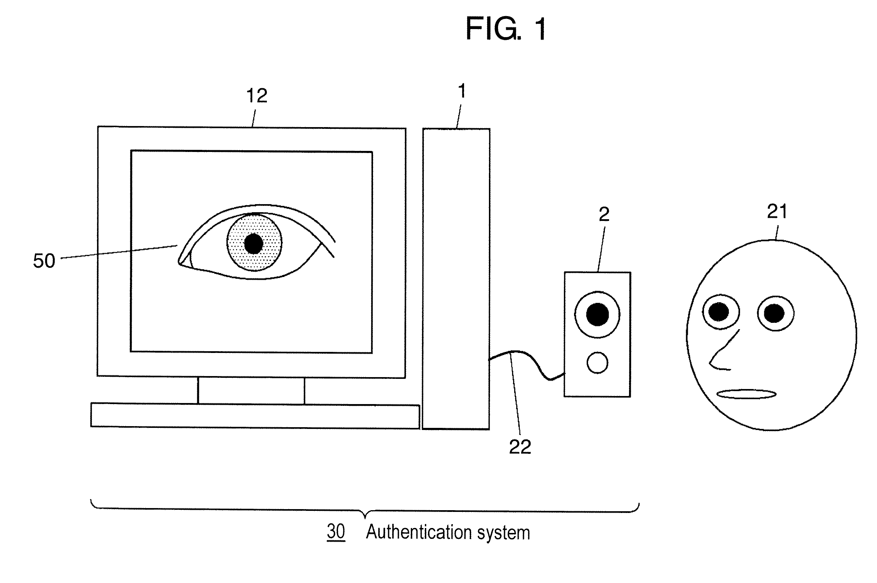

Fig. 1 shows the outline of the authentication system according to the first embodiment of the present invention.

In Fig. 1, authentication system 30 according to the first embodiment of the present invention is provided with image pickup unit 2 which captures an image containing an eye area (hereinafter, the "eye image") of user-to-be-authenticated 21; authentication device 1 which authenticates user-to-be-authenticated 21 as a registered user by encoding the iris area of his/her eye image captured by image pickup unit 2 into authentication information in a manner described later, and then comparing and collating the authentication information with registered authentication information which has been registered previously; and display unit 12 which displays display image 50 formed by subjecting an eye image of user-to-be-authenticated 21 to an image process in a manner described later.

Image pickup unit 2 can be a photography device such as a well-known CCD camera.

Image pickup unit 2 and authentication device 1 are connected with each other via information transmitter 22, and image information photographed with image pickup unit 2 is transmitted to authentication device 1. Information transmitter 22 can be a wired cable, or can be freely selected from other well-known means of communication such as wireless or infrared communication.

Display unit 12 can be freely selected from well-known display devices using liquid crystal display, EL or the like.

In authentication system 30, user-to-be-authenticated 21 first holds image pickup unit 2 with one hand, and continuously photographs an eye of his/her own with image pickup unit 2. The photographed image is transmitted to authentication device 1 via information transmitter 22. In authentication device 1, the image from image pickup unit 2 is subjected to an image process, so that it can be displayed as display image 50 on display unit 12.

User-to-be-authenticated 21 photographs one of his/her eye while moving image pickup unit 2, and at the same time, looks at display image 50 on display unit 12 with the other eye. When the eye is guided to the appropriate position (for example, in the center of display unit 12 or in the displayed guide), user-to-be-authenticated 21 enters an instruction to start an authentication process via an input unit (not illustrated) provided in either image pickup unit 2 or authentication device 1. As a result, the eye image selected by user-to-be-authenticated 21 is taken into authentication device 1.

In authentication device 1, the iris area is cut out from the obtained eye image, and is subjected to an authentication process, for example, in the manner described in Japanese Patent No. 3307936 mentioned above, thereby outputting a signal indicative of whether user-to-be-authenticated 21 has been authenticated as a registered user or not to an external device like display unit 12. Thus, authentication system 30 can authenticate user-to-be-authenticated 21 as a registered user by making use of the iris pattern of his/her eye.

In authentication system 30 according to the first embodiment of the present invention, user-to-be-authenticated 21 can move image pickup unit 2, while looking at display image 50 on display unit 12, in other words, while using display image 50 as a guide. This enables authentication device 1 to take in an appropriate eye image containing an iris area required for authentication.

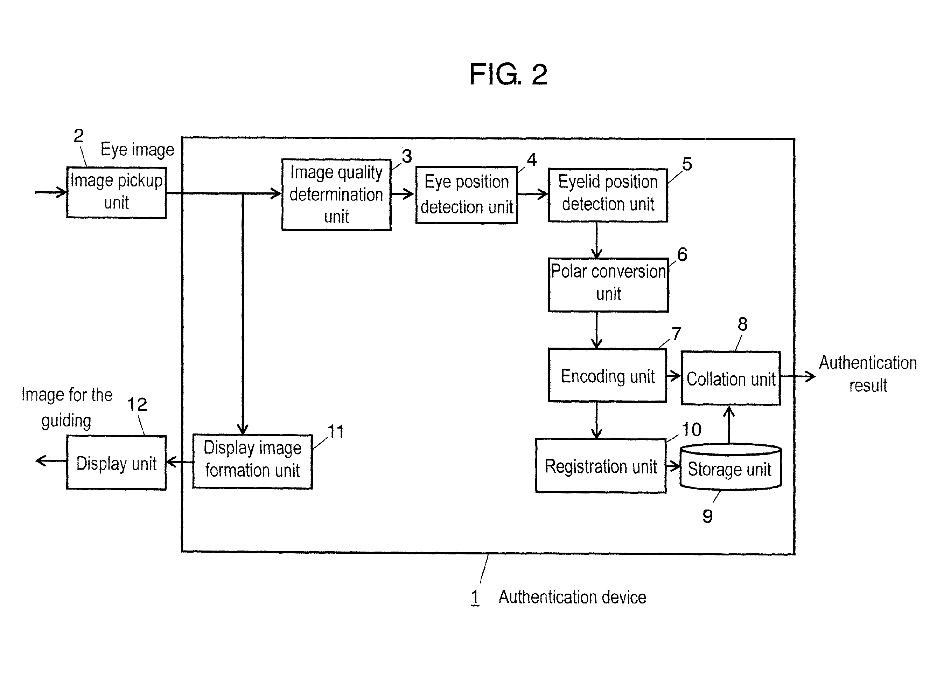

Authentication device 1 provided in authentication system 30 according to the first embodiment of the present invention will be detailed as follows. Fig. 2 shows a block diagram of the structure of authentication device 1 according to the first embodiment of the present invention.

In Fig. 2, authentication device 1 according to the first embodiment of the present invention is formed of the following components: display image formation unit 11 which forms an entered image into a display image that will be described later and outputs the display image; image quality determination unit 3 which determines the quality of the entered image; eye position detection unit 4 which detects the photographed eye position from the image which has been determined to be adequate in quality; eyelid position detection unit 5 which detects the photographed eyelid position from the image; polar conversion unit which converts the polar coordinates of the image; encoding unit 7 which encodes the converted information in a specific manner to form authentication information; registration unit 10 which registers the information to be registered as registered authentication information out of the encoded authentication information; storage unit 9 which stores the registered authentication information; and collation unit 8 which compares and collates the authentication information encoded from an image by encoding unit 7 with the registered authentication information stored in storage unit 9 in a specific manner, and which, when a match is determined, outputs an authentication result indicating successful user authentication.

The functions of eye position detection unit 4, eyelid position detection unit 5, polar conversion unit 6, encoding unit 7 and collation unit 8 can be achieved, e.g. in the manner suggested in Japanese Patent No. 3307936 mentioned above.

Image quality determination unit 3 determines whether the items to evaluate the quality of an image from image pickup unit 2 such as contrast are within specified levels or not, and also whether the image contains an eye area or not.

Storage unit 9 can be freely selected from well-known storage devices such as semiconductor memories and magnetic disks.

The functions of image quality determination unit 3, eye position detection unit 4, eyelid position detection unit 5, polar conversion unit 6, encoding unit 7, collation unit 8, registration unit 10 and display image formation unit 11 can be either realized by hardware, or described by software so as to be executed by a calculator or the like. In a case where these functions are realized by software, authentication device 1 can be structured by using a computer with a calculator loaded with a program to realize each of the functional blocks.

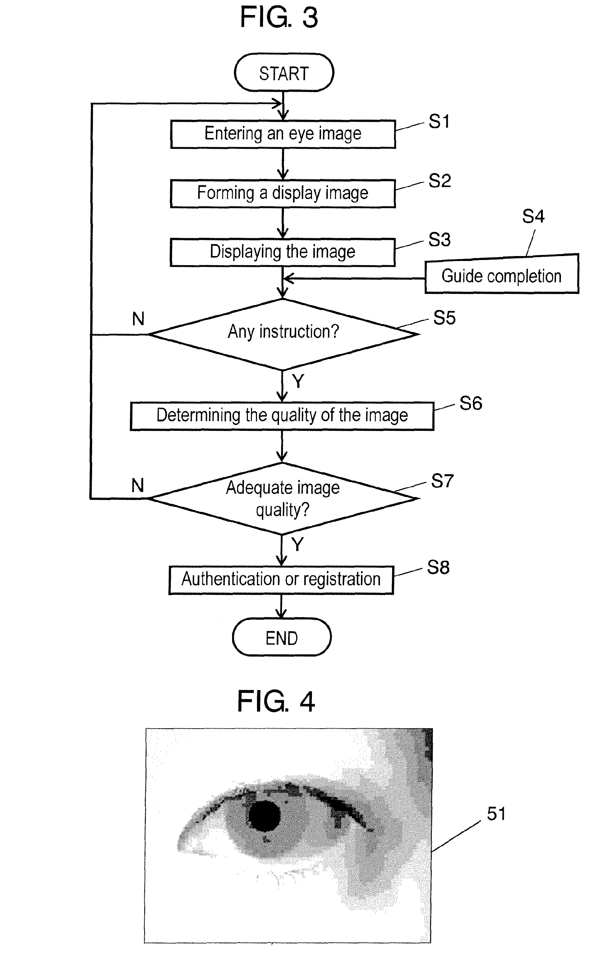

Operations of authentication device 1 according to the first embodiment of the present invention will be described as follows. Fig. 3 is a flowchart showing the process steps of authentication device 1 according to the first embodiment of the present invention.

First of all, an eye image photographed with image pickup unit 2 is entered to display image formation unit 11 (S1).

Display image formation unit 11 forms display image 50 in a manner described later (S2). Then, display image formation unit 11 outputs display image 50 to display unit 12 which displays display image (S3).

User-to-be-authenticated 21 determines whether display image 50 is displayed in a specified position (e.g. in the center of the screen) on display unit 12 by using an eye image of his/her own as a guide as described above. When it is displayed in the appropriate position, user-to-be-authenticated 21 enters an instruction to complete the guide (S4).

When there is such an instruction from user-to-be-authenticated 21 (S5), image quality determination unit 3 determines the quality of the image (S6). When the image is determined to be adequate in quality (S7), the image is transmitted from image quality determination unit 3 to eye position detection unit 4. After this, either an authentication process or a register process to register user-to-be-authenticated 21 as an authenticated user is performed (S8). The authentication process or the register process can be performed in the manner described in Japanese    Patent    No. 3307936 mentioned above.

On the other hand, when image quality determination unit 3 determines the image to be inadequate in quality at Step S7, user-to-be-authenticated 21 is urged to rephotograph an image by, e.g. displaying an error message on display unit 12 (S1).

Display image 50 formed by display image formation unit 11 will be detailed as follows.

Display image 50 formed by display image formation unit 11 must be invulnerable to unauthorized use by a third person who steals display image 50 to impersonate user-to-be-authenticated 21 by, e.g. copying display image 50 on display unit 12 with Print Screen. For this, display image formation unit 11 forms display image 50 by degrading a clear eye image. Here, "to degrade an eye image" means to degrade the quality of a very clear image with appropriate contrast, brightness, focal point and other requirements to a degree at which authentication information cannot be formed from the iris area of this image, or to a degree at which, even if it is formed, the authentication information does not agree with the authentication information formed from the very clear original eye image. To degrade an eye image can also indicate to replace some or all of the eye image with another image as will be described later.

One such method for image degradation is to compress an entered image in accordance with the frequency range, namely, the well-known JPEG (Joint Photographic Experts Group) method, so that display image formation unit 11 can form display image 50. The JPEG compression process can dramatically reduce the risk of identity theft using display image 50.

As one method, the JPEG compression process can be done by performing downsampling, the DCT (Discrete Cosine Transform) process, the quantization process and the Huffman conversion. As another method, the DCT process can be replaced with the DWT (Discrete Wavelet Transform) process. Other various well-known methods can be also used.

Fig. 4 shows an example of display image 51 which has been subjected to the JPEG compression. Display image 51 has a compressibility of 98%. As shown in Fig. 4, display image 51 is compressed to a degree which makes the iris pattern indistinguishable, thereby dramatically reducing the risk of identity theft. Here, the term "compressibility" is a ratio of the size (the number of bytes) of image information before and after the compression process, and is expressed as follows:

$$\text{Compressibility} = 100 - (\text{compressed image size}/ \text{original image size}) \times 100)$$

Examination indicates that the compressibility of the image is preferably within a certain range in order not to make the image look unnatural and also in order to prevent the image from being copied with Print Screen and used for identity theft.

Too high a compressibility makes the image look unnatural, and too low a compressibility has the risk of identity theft when the image is copied with Print Screen. Display image 51 shown in Fig. 4 can provide user-to-be-authenticated 21 with effective and natural guiding without giving him/her an uncomfortable feeling.

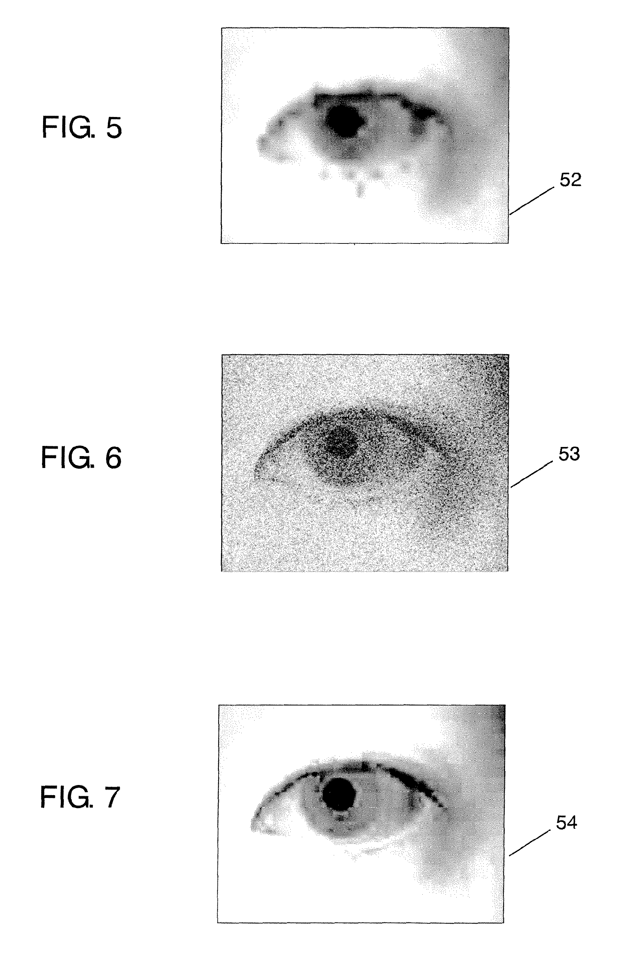

Another possible method for image degradation is reducing the number of pixels (hereinafter, the "resizing") that compose a display image formed by display image formation unit 11, thereby reducing the risk of identity theft. As one example of the resizing, Fig. 5 shows display image 52 formed by removing every 19 pixels both in the column and row directions. As shown in Fig. 5, display image 52 has an iris pattern which is indistinguishable enough to dramatically reduce the risk of identity theft. In addition, display image 52 can provide user-to-be-authenticated 21 with effective and natural guiding without giving him/her an uncomfortable feeling.

The present invention does not limit the method for the resizing. As another example, every other line of pixels both in the vertical and horizontal directions can be removed, or the process to reduce the number of pixels can be applied either in the vertical direction or in the horizontal direction.

Further another possible method for image degradation is to add noise information to an image, so that display image formation unit 11 can form display image 53. The present invention does not limit the method for noise addition. As one example, Fig. 6 shows display image 53 formed by randomly generating a noise signal with an intensity amplitude of 50, and then by adding or subtracting the noise signal to/from the intensity of each pixel. As shown in Fig. 6, display image 53 has an iris pattern which is indistinguishable enough to dramatically reduce the risk of identity theft. Furthermore, display image 53 can provide user-to-be-authenticated 21 with effective and natural guiding without giving him/her an uncomfortable feeling.

In the present description, for the sake of simplicity, each of the pixels composing an image has 256 gradations.

As another method for noise addition other than the addition of a randomly generated noise as mentioned above, it is possible to add a noise generated according to a Gaussian distribution with a specified amplitude.

It is also possible to combine two or more of the aforementioned processes: compression, resizing and noise addition so as to form display image 54. Fig. 7 shows an example of display image 54.

Display image 54 shown in Fig. 7 is obtained by the resizing in such a manner to reduce the number of pixels to 1/4 both in the vertical and horizontal directions, and further applying a JPEG compression process (compressibility: 95.6%).

Display image 54 thus formed is a natural eye image as shown in Fig. 7 and hardly gives user-to-be-authenticated 21 an uncomfortable feeling. Furthermore, the iris fold pattern in display image 54 used for authentication is indefinite enough to dramatically reduce the risk of identity theft.

As described hereinbefore, authentication system 30 according to the first embodiment of the present invention can provide a high-security authentication system which can form, in the specific manner, display image 50 to be displayed on display unit 12 for guiding user-to-be-authenticated 21, thereby preventing the risk of identity theft, even if display image 50 is copied with Print Screen or by other ways. In addition, display image 50 can provide user-to-be-authenticated 21 with effective and natural guiding without giving him/her an uncomfortable feeling.

In authentication system 30 according to the first embodiment of the present invention, user-to-be-authenticated 21 moves image pickup unit 2 by hand; however, the present invention is not limited to this example. It is of course possible that image pickup unit 2 is installed, and user-to-be-authenticated 21 moves himself/herself so as to put his/her eye in the appropriate position for photography.

Furthermore, in authentication system 30 in the first embodiment of the present invention, image pickup unit 2, authentication device 1 and display unit 12 are structured as separate units; however, the present invention is not limited to this example. It goes without saying that image pickup unit 2 can be incorporated into authentication device 1; display unit 12 can be incorporated into authentication device 1; image pickup unit 2 and display unit 12 can be integrated with each other; or image pickup unit 2, authentication device 1 and display unit 12 can be integrated with each other.

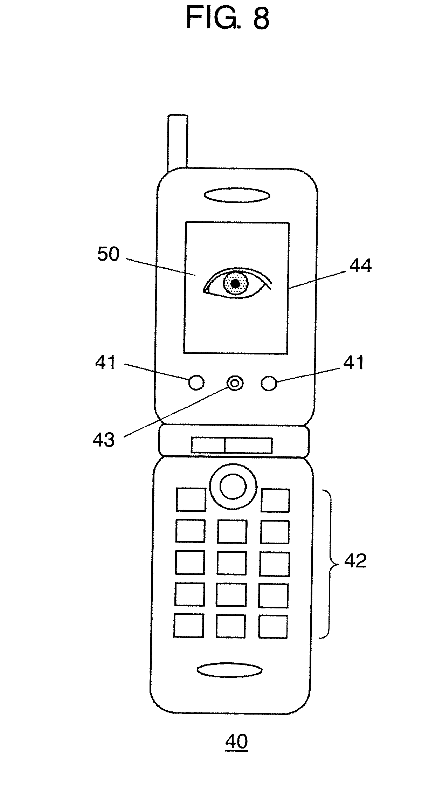

As an authentication system in which image pickup unit 2, authentication device 1 and display unit 12 are integrated with each other, mobile phone device 40 provided with an authentication function is shown in Fig. 8.

Mobile phone device 40 shown in Fig. 8 has CCD camera 43 as image pickup unit 2, and liquid crystal display 44 as display unit 12.

Mobile phone device 40 further has two LEDs 41 which emit infrared light to photograph high-contrast iris images of user-to-be-authenticated 21. CCD camera 43 has a visible light cutting (infrared permeable) filter to photograph high-contrast iris images of user-to-be-authenticated 21. The reason to provide two LEDs 41 is as follows . When user-to-be-authenticated 21 wears glasses, an image photographed with one light source may contain a light component reflected from the glass lenses; however, providing two light sources can increase the chance of photographing an image not containing such a light component. Thus, the probability of containing a light component reflected from the glass lenses can be reduced.

When finding that his/her eye is appropriately displayed (for example, fully displayed on the screen center or displayed as indicated by a separately provided guide unit) while looking at display image 50 on liquid crystal display 44, user-to-be-authenticated 21 presses appropriate direct key 42. As a result, the eye image is entered to authentication device 1 built in mobile phone device 40 so as to perform authentication of user-to-be-authenticated 21.

Although in authentication system 30 according to the first embodiment of the present invention, user-to-be-authenticated 21 moves image pickup unit 2 close to his/her eye to photograph it, the present invention is not limited to this example. It is of course possible that user-to-be-authenticated 21 photographs a wider area including his/her eye (e.g., the whole face or whole body) with image pickup unit 2, and authentication device 1 cuts out the eye area from the image for an authentication process.

SECOND EXEMPLARY EMBODIMENT

An authentication system according to a second embodiment of the present invention will be described as follows.

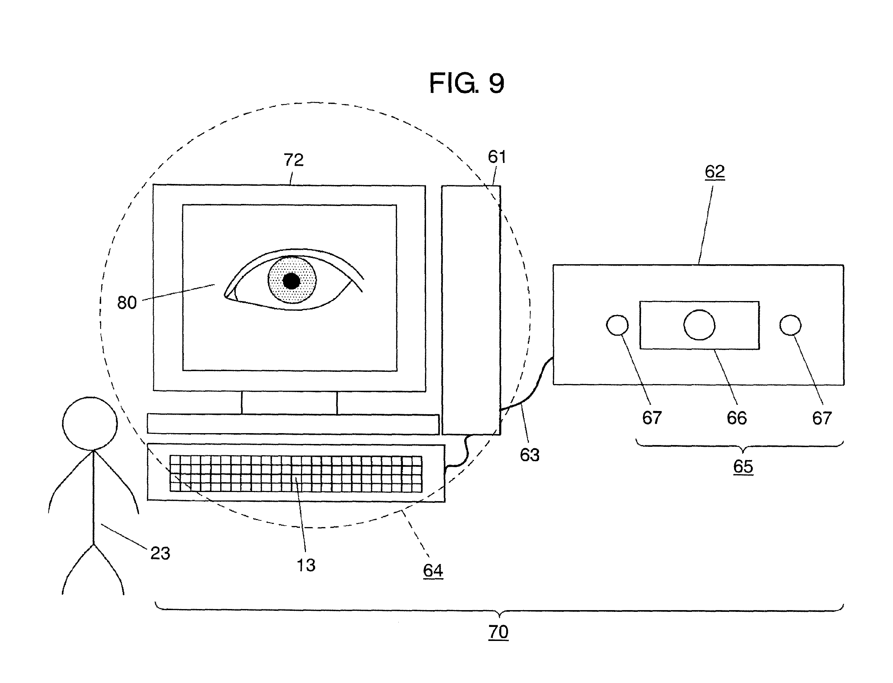

Fig. 9 shows the concept of the authentication system according to the second embodiment of the present invention.

As shown in Fig. 9, authentication system 70 according to the second embodiment of the present invention is provided with image pickup unit 62 which captures an eye image of user-to-be-authenticated 21, and registration control device 64 which is connected to image pickup unit 62 via information transmitter 63.

Registration control device 64 has authentication device 61, display unit 72 and input unit 13.

Such form of authentication system 70 has been widely used for room entry control systems to control the entry of user-to-be-authenticated 21 into the room. In a room entry control system, an eye image of user-to-be-authenticated 21 is previously photographed and encoded to register it as registered authentication information. Furthermore, user-to-be-authenticated 21 is made to photograph his/her eye image every time entering or leaving the room so as to compare and collate authentication information made from the eye image with the registered authentication information. User-to-be-authenticated 21 is permitted to enter or leave the room when authenticated as a registered user.

In authentication system 70 according to the second embodiment of the present invention, in the register process to process user-to-be-authenticated 21 as a legitimate user, user-to-be-authenticated 21 photographs his/her eye image with image pickup unit 62. In registration control device 64 installed away from image pickup unit 62, administrator 23 visually checks the eye image, and registers the eye image when determining it can be registered. More specifically, administrator 23 looks at the eye image displayed on display unit 72 and checks whether the eye is fully open (whether the whole iris area is contained) and whether the iris-containing area of the eye is within the screen. If there is no problem, administrator 23 permits the eye image to be registered.

It has been frequently pointed out that such a room entry control system can give administrator 23 the chance of identity theft by letting him/her fraudulently copy the eye image displayed on display unit 72 of registration control device 64 with Print Screen or by other ways.

Authentication system 70 according to the second embodiment, however, does not allow identity theft even if display image 80 is duplicated because display image 80 displayed on display unit 72 is formed by an image process which will be described later.

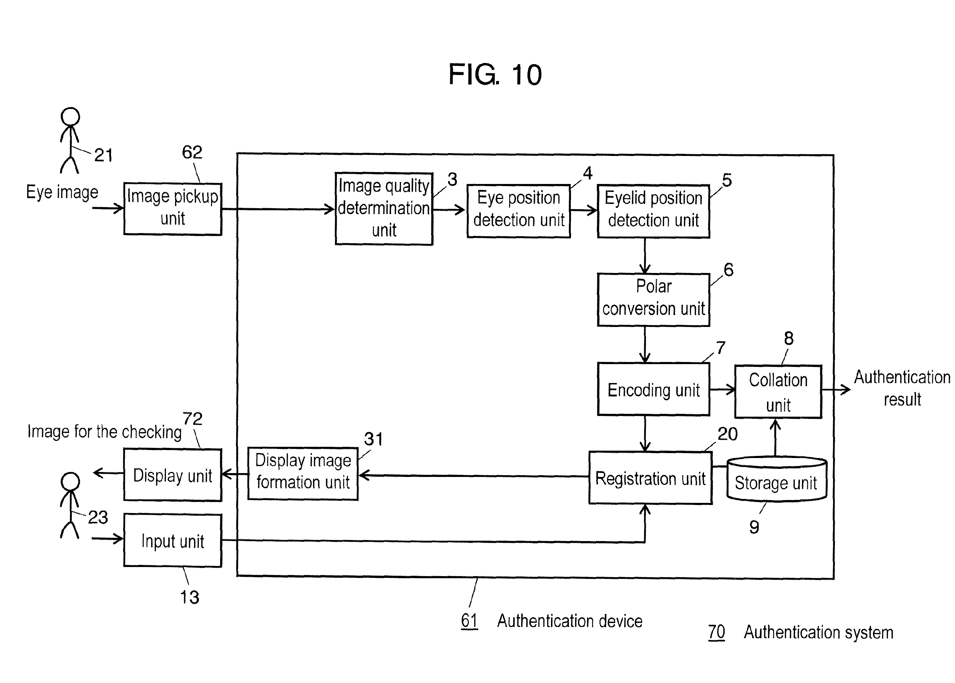

Fig. 10 is a block diagram showing the structure of authentication system 70 according to the second embodiment of the present invention.

Of the functional blocks in authentication device 61 in authentication system 70 shown in Fig. 10, the same functional blocks as those in authentication device 1 of the first embodiment will be referred to with the same reference numbers, and their description will be omitted.

Authentication device 61 according to the second embodiment of the present invention differs from authentication device 1 of the first embodiment in that eye images are not entered from image pickup unit 62 to display image formation unit 31 but are transmitted from registration unit 20, and that registration unit 20 receives a signal from input unit 13 operated by administrator 23.

Image pickup unit 62 in the second embodiment of differs from image pickup unit 2 of the first embodiment in that image pickup unit 62 has eye position guide unit 65 to guide user-to-be-authenticated 21. Fig. 9 shows a case where eye position guide unit 65 includes mirror guide unit 66 which guides user-to-be-authenticated 21 in the directions horizontal and vertical to the device to a position where he/she can see his/her eye, and movement instruction unit 67 which gives user-to-be-authenticated 21 the direction to move vocally, visually or by other methods, so that user-to-be-authenticated 21 can adjust the distance from the device.

The following is a detailed description of the difference between authentication device 61 according to the second embodiment and authentication device 1 of the first embodiment.

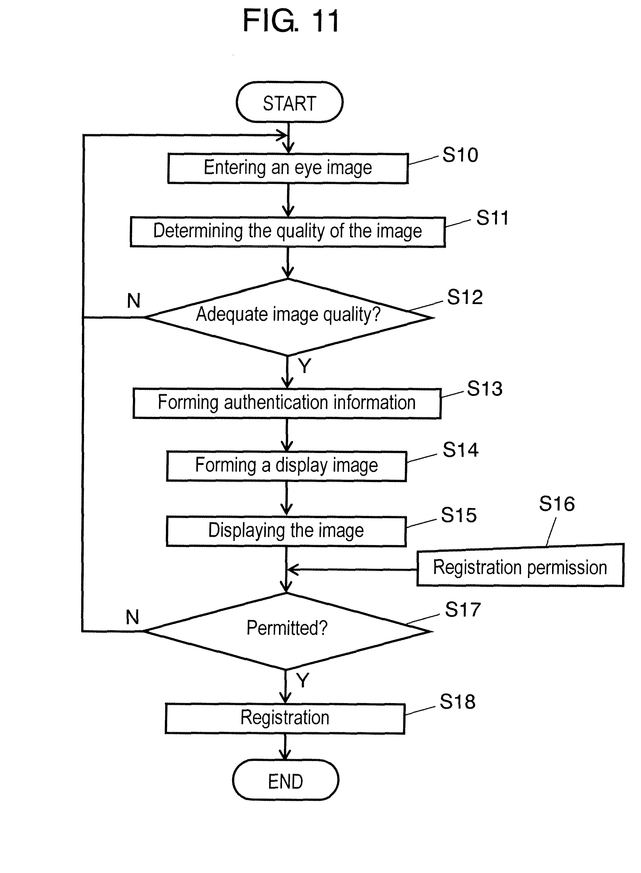

Fig. 11 is a flowchart depicting the operating steps of authentication system 70 according to the second embodiment of the present invention. The operations to register user-to-be-authenticated 21 will be described as follows.

First of all, in image pickup unit 62, an eye image of user-to-be-authenticated 21 is photographed (S10). In this case, user-to-be-authenticated 21 can easily put his/her eye in the appropriate position for photography with the help of eye position guide unit 65 in image pickup unit 62.

The photographed eye image is transmitted to image quality determination unit 3 where the above-described image quality determination is performed (S11). When image quality determination unit 3 determines that the image is adequate in quality (S12), the eye image is transmitted to eye position detection unit 4 where the eye image is subjected to specified processes in eyelid position detection unit 5, polar conversion unit 6 and encoding unit 7 in the manner described in Japanese Patent No. 3307936 mentioned above so as to form authentication information (S13). On the other hand, when image quality determination unit 3 determines that the image is inadequate in quality at Step S12, it is informed to user-to-be-authenticated 21 to urge him/her to rephotograph an eye image (S10).

When receiving encoded authentication information from encoding unit 7, registration unit 20 inquires administrator 23 whether this information should be registered or not. At the same time, registration unit 20 transmits the eye image, which corresponds to the encoded authentication information and which has been transmitted from encoding unit 7, to display image formation unit 31. Display image formation unit 31 forms display image 80 in the same manner as display image formation unit 11 described in the first embodiment (S14).

Display image 80 is transmitted from display image formation unit 31 to display unit 72 where display image 80 is displayed (S15).

Looking at display image 80 displayed on display unit 72, administrator 23 performs the aforementioned checking to see whether the image can be registered or not. When determining that the eye image can be registered, administrator 23 enters an instruction via input unit 13 to permit the image to be registered (S16).

When receiving the instruction (S17), registration unit 20 stores the authentication information from encoding unit 7 as registered authentication information in storage unit 9 so as to terminate the register process (S18). On the other hand, when there is no instruction from input unit 13 or when there is an instruction indicating that the image is inadequate to be registered at Step S17, the following solutions are available: to return to Step S10 so as to make user-to-be-authenticated 21 rephotograph his/her eye image; to generate an error signal to an external device; and to display an error message on display unit 72.

In the second embodiment of the present invention, display image 80 formed by display image formation unit 31 by applying an image process to an eye image must have a quality which is good enough for administrator 23 to determine whether display image 80 displayed on display unit 72 can be registered or not, and at the same time, which is bad enough to prevent identity theft even if it is copied with Print Screen or by other ways.

With this structure, authentication system 70 according to the second embodiment of the present invention can provide a high-security authentication system which makes it difficult to cause identity theft, even if administrator 23 fraudulently copies display image 80 displayed on display unit 72 with Print Screen or by other ways.

In authentication system 70 according to the second embodiment of the present invention, image pickup unit 62, authentication device 61 and display unit 72 are structured as separate units; however, the present invention is not limited to this example. It goes without saying that image pickup unit 62 can be incorporated into authentication device 61; display unit 72 can be incorporated into authentication device 61; image pickup unit 62 and display unit 72 can be integrated with each other; or image pickup unit 62, authentication device 61 and display unit 72 can be integrated with each other.

In a case where the whole device is integrally structured as described above, when registration unit 20 is going to register authentication information, user-to-be-authenticated 21 himself/herself can determine whether display image 80 should be registered or not by looking at it.

THIRD EXEMPLARY EMBODIMENT

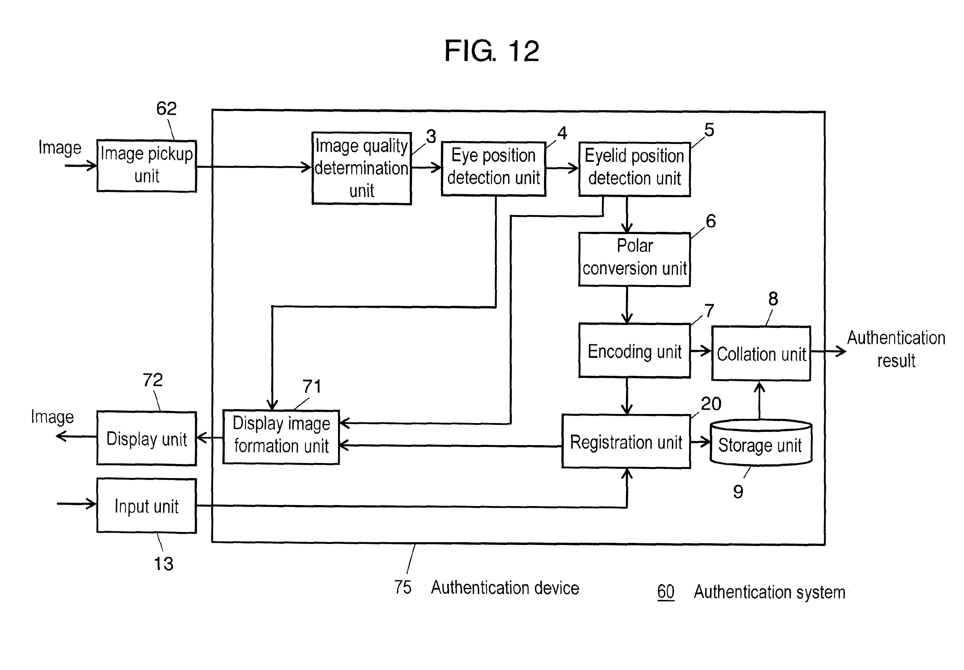

Authentication system 60 according to a third embodiment of the present invention will be described as follows. Fig. 12 is a block diagram showing the structure of authentication system 60 according to the third embodiment of the present invention.

Authentication system 60 according to the third embodiment is basically the same as authentication system 70 according to the second embodiment. For the sake of simplicity, of the functional blocks in authentication system 70, the same functional blocks as those in authentication systems 30 and 70 of the first and second embodiments will be referred to with the same reference numbers, and their description will be omitted.

Authentication system 60 according to the third embodiment differs from authentication system 70 described above in that display image formation unit 71 in authentication device 75 is connected not only to registration unit 20, but also to eye position detection unit 4 and eyelid position detection unit 5. This structure enables display image formation unit 71 to form a display image by considering information about the center and outline positions of an iris-pupil area (hereinafter, the "eye position") in the eye image detected by eye position detection unit 4, and about the position of the eyelid (hereinafter, the "eyelid position") detected by eyelid position detection unit 5.

With such a structure, in the third embodiment of the present invention, display image formation unit 71 can form a display image from an eye image received from registration unit 20 by applying the aforementioned image processes: image compression, noise addition or resizing, or by applying another image process described later.

The functions of display image formation unit 71 in the third embodiment of the present invention will be detailed as follows.

Since display image formation unit 71 can take the eye position and the eyelid position into consideration, it becomes possible to apply an image process selectively to an iris-containing area needed for authentication out of an eye image. The iris-containing area can be found by subtracting the eyelid area detected by eyelid position detection unit 5 from the eye image which has been captured by image pickup unit 62, and then calculating, from the remaining area, the area which overlaps with the iris-pupil area detected by eye position detection unit 4. The iris-containing area thus found can be selectively subjected to the image process.

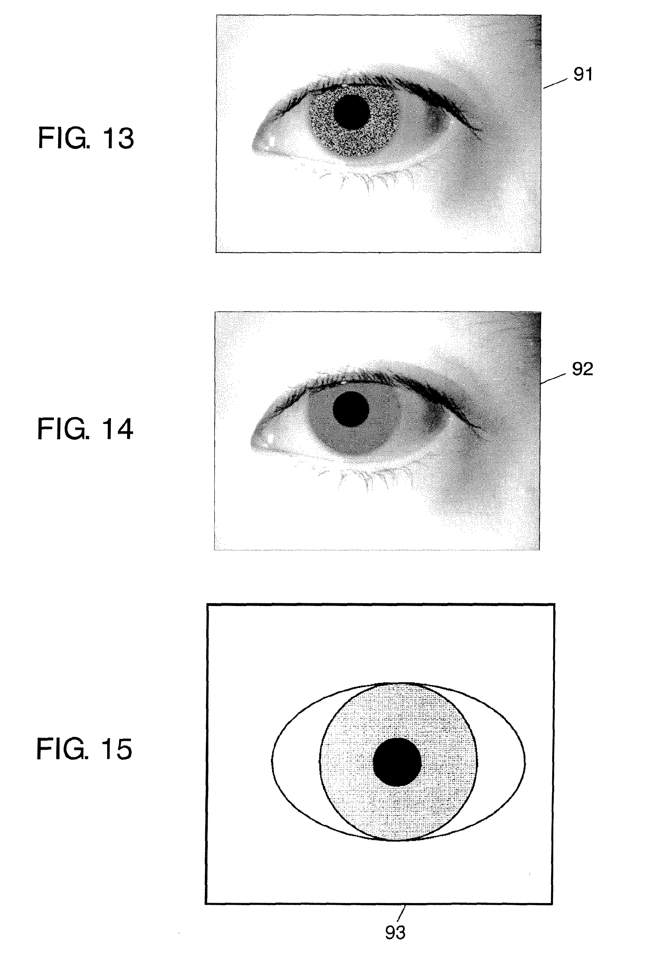

As an example of the image process done by display image formation unit 71, Fig. 13 shows display image 91 formed by adding noise selectively to the iris-pupil area. As shown in Fig. 13, display image 91 is natural looking as a whole, so that administrator 23 can determine positively whether display image 91 should be registered or not. Because being added with noise, the iris-containing area in display image 91 can dramatically reduce the chance of successful user authentication by fraudulently using display image 91.

The noise addition can be done in the same manner as the noise addition described in the first embodiment.

As another image process, Fig. 14 shows display image 92 formed by replacing the iris-pupil area in an eye image with an artificial iris pattern previously prepared. As shown in Fig. 14, display image 92 thus formed is natural enough to easily determine whether it can be registered or not. Furthermore, the extremely low risk of identity theft using display image 92 can make authentication system 60 highly secured.

As further another image process, Fig. 15 shows display image 93 formed by replacing the whole eye area in an eye image with a deformed eye pattern previously prepared. The replacement of the specified pattern is done by using the coordinates of the center position of the iris-pupil area detected by eye position detection unit 4.

It is more difficult to determine whether display image 93 can be registered or not than in the case of the other display images. However, display image 93 can be used without problems for guiding user-to-be-authenticated 21 as will be described later in a fourth embodiment. Display image 93 can be even used to determine whether it can be registered or not by showing a blink in the image by providing eyelid information.

Although in the aforementioned example, the deformed eye pattern is used as the previously prepared eye pattern, the present invention is not limited to this example.

For example, as an eye pattern, an artificial iris fold pattern can be used.

In the third embodiment of the present invention, display image formation unit 71, eye position detection unit 4 and eyelid position detection unit 5 are connected with each other; however, the present invention is not limited to this structure. It goes without saying that the same image processes as described above can be performed in a structure where the information about the eye position detected by eye position detection unit 4 and the eyelid position detected by eyelid position detection unit 5 are transmitted to display image formation unit 71 via polar conversion unit 6, encoding unit 7 and registration unit 20, with substantially the same effects as in the aforementioned connected structure.

FOURTH EXEMPLARY EMBODIMENT

As a fourth embodiment of the present invention, further another authentication system will be described as follows.

The first embodiment shows authentication system 30 as an example of applying the specified image process to an image so as to form a display image which is displayed to guide user-to-be-authenticated 21. The second and third embodiments show authentication systems 70 and 60 as examples of applying the image process to an eye image photographed by user-to-be-authenticated 21 so as to form a display image which is used by administrator 23 for checking and registration.

However, the authentication system of the present invention is not limited to these embodiments.

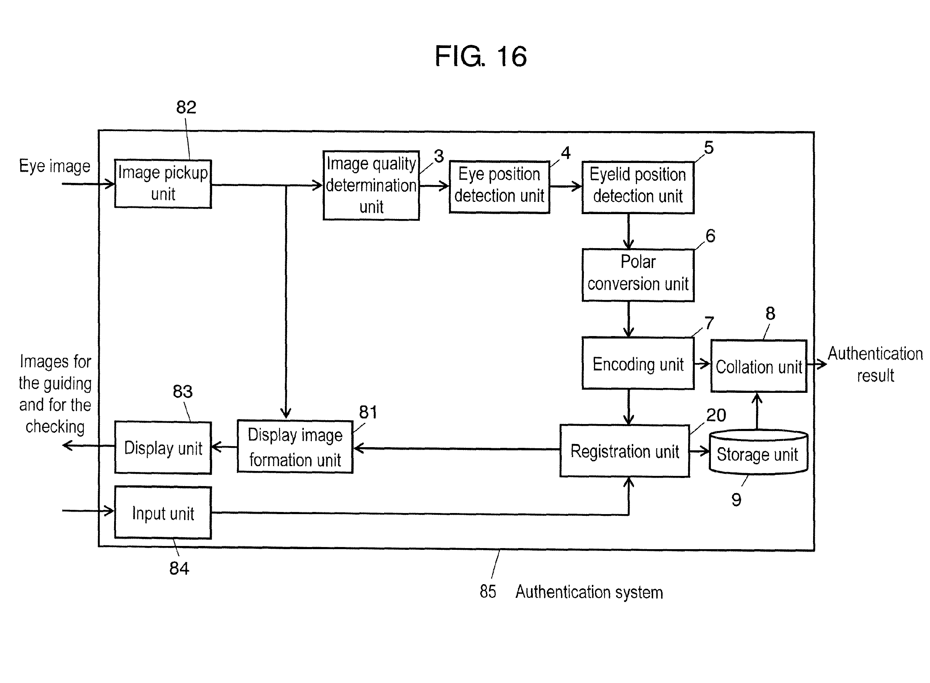

Fig. 16 shows a block diagram of the structure of authentication system 85 according to the fourth embodiment of the present invention. Of the functional blocks in authentication system 85, the same functional blocks as those in the first to third embodiments will be referred to with the same reference numbers, and their description will be omitted.

Authentication system 85 according to the fourth embodiment of the present invention combines features of authentication system 30 of the first embodiment with features of authentication system 70 of the second embodiment.

Authentication system 85 of the fourth embodiment differs from authentications systems 30 and 70 of the first and second embodiments, respectively, in that image pickup unit 82, display unit 83 and input unit 84 are incorporated into an authentication device to form authentication system 85, and in that display image formation unit 81 is connected both to image pickup unit 82 and registration unit 20.

Display image formation unit 81 in authentication system 85 according to the fourth embodiment of the present invention performs the same image processes as in display image formation unit 11 in authentication device 1 of the first embodiment and in display image formation unit 31 in authentication device 61 of the second embodiment. The image processes are, namely, image compression, noise addition and resizing in a whole image.

In authentication system 85 according to the fourth embodiment with this structure, a display image can be displayed on display unit 83 for guiding user-to-be-authenticated 21, and can also be displayed for being checked by administrator 23 (or user-to-be-authenticated 21) when registration unit 20 is going to register the authentication information from encoding unit 7 to storage unit 9 as registered information.

Consequently, both at the time of guiding user-to-be-authenticated 21 and at the time of registering authentication information, there is an extremely low risk of identity theft done by copying a display image with Print Screen or by other ways. This can provide high-security authentication system 85.

FIFTH EXEMPLARY EMBODIMENT

Authentication system 88 according to a fifth embodiment of the present invention will be described as follows.

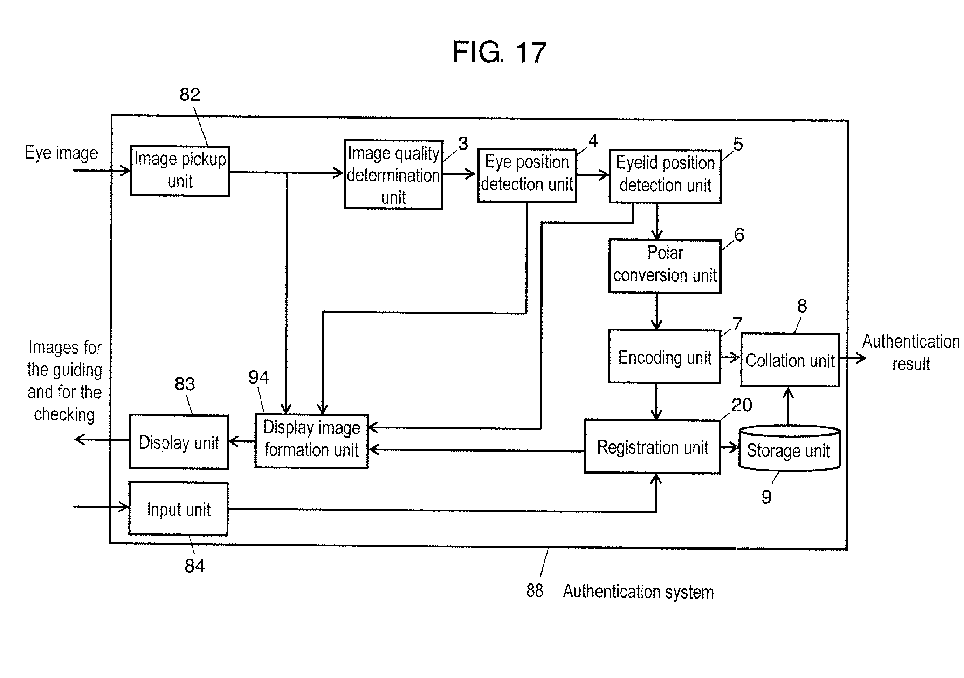

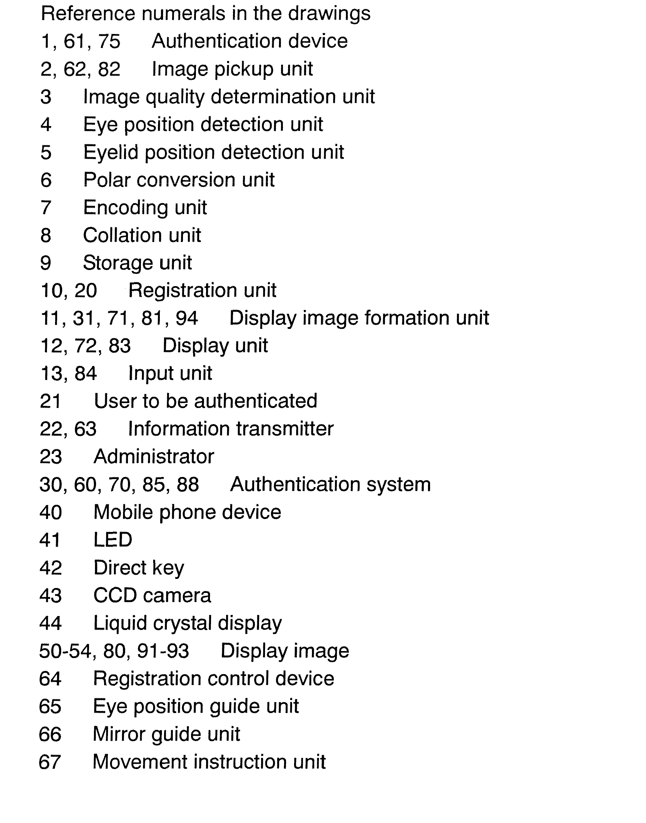

Fig. 17 shows a block diagram of the structure of authentication system 88 according to the fifth embodiment of the present invention.

As shown in Fig. 17, authentication system 88 according to the fifth embodiment has a lot in common with authentication system 85 of the fourth embodiment, and is only different in that display image formation unit 94 is connected not only to image pickup unit 82 and registration unit 20, but also to eye position detection unit 4 and eyelid position detection unit 5.

Consequently, authentication system 88 of the fifth embodiment of the present invention combines functions of display image formation unit 11 in authentication device 1 of the first embodiment with functions of display image formation unit 71 in authentication device 75 of the third embodiment.

More specifically, in authentication system 88, at the time of guiding user-to-be-authenticated 21, display image formation unit 94 can perform the same function as display image formation unit 11 of the first embodiment, that is, to apply compression, noise addition or resizing to an eye image transmitted from image pickup unit 82. As a result, display unit 83 can display a display image which has a low risk of identity theft even if it is fraudulently duplicated.

On the other hand, in authentication system 88, at the time of registering encoded authentication information formed from an eye image of user-to-be-authenticated 21 by registration unit 20 to storage unit 9, display image formation unit 94 can obtain the information about the iris-containing eye position and eyelid position respectively from eye position detection unit 4 and eyelid position detection unit 5 connected thereto. Thus, display image formation unit 94 can perform the same functions as those of display image formation unit 71 in authentication device 75 of the third embodiment, that is, selectively adding noise to the at least iris-containing area of an eye, or replacing the area with an eye pattern or other images previously formed.

In authentication system 88 thus structured, the detection of the eye position and the detection of the eyelid position are performed respectively by eye position detection unit 4 and eyelid position detection unit 5 which also form authentication information from an eye image. This can accelerate the display image formation and also reduce the number of components and the size of the whole device structure.

Thus, in authentication system 88 of the fifth embodiment of the present invention, at the time of guiding user-to-be-authenticated 21, a display image degraded as a whole can be used, whereas at the time of registering authentication information, a display image that is degraded in the iris area but not in the other area can be displayed so that administrator 23 or the user to be authenticated can easily determine whether it should be registered or not.

Display images for the guiding and display images for the checking both have a low risk of identity theft even if they are fraudulently duplicated, thereby providing authentication system 88 according to the fifth embodiment with high security. Although in the embodiments of the present invention, an image pickup unit, a display image formation unit and a display unit are incorporated into an authentication device, the present invention is not limited to this structure. The image pickup unit, the display image formation unit and the display unit can be incorporated into other devices for retina recognition, face recognition, motion detection, etc. in which a human eye-containing image is photographed and processed in order to reduce the risk of fraud such as identity theft even when a display image displayed on the display unit is fraudulently duplicated.

INDUSTRIAL APPLICABILITY

According to the eye image pickup device, the authentication device, the image processing method and the program according to the present invention, an image is displayed on the display unit after the iris-containing area is degraded. This dramatically reduces the risk of someone impersonating a legitimate user even if he/she steals a display image displayed on the display unit, thereby achieving high security. Thus, they are useful as an eye image pickup device for capturing eye images, an authentication device using the device, an image processing method and a program, respectively.

**Claims**

1.  An eye image pickup device comprising:

    an eye image pickup unit for capturing an eye image;
    a display image formation unit for forming a display image from the eye image by degrading an at least iris-containing area in the eye image; and
    a display unit for displaying the display image formed by the display image formation unit.

2.  An authentication device comprising:

    the eye image pickup device according to claim 1;
    an authentication information formation unit for forming authentication information from the eye image of a user to be authenticated entered from the eye image pickup unit; and
    an authentication unit for authenticating the user by comparing and collating the authentication information with registered authentication information which has been registered previously.

3.  The authentication device according to claim 2, wherein
    the display image formation unit forms a display image used for guiding the user about an eye position; and
    the authentication information formation unit forms the authentication information from the eye image of the user, the eye image being guided to one of a specified position and a specified region by the display image on the display unit.

4.  The authentication device according to claim 2 further comprising:

    an authentication information registration unit for registering, as registered authentication information, the authentication information formed from the eye image of the user, wherein
    the display image formation unit forms a display image for determining whether the eye image of the user should be registered or not; and
    the authentication information registration unit registers the authentication information as the registered authentication information after the display image formed by the display image formation unit is displayed on the display unit.

5.  The authentication device according to claim 2, wherein
    the display image formation unit forms the display image by selectively applying an image process to the at least iris-containing area in the eye image.

6.  The authentication device according to claim 5, wherein
    the authentication information formation unit comprises: an eye position detection unit for detecting an eye position from the eye image; and an eyelid position detection unit for detecting an eyelid position from the eye image; and
    the display image formation unit determines the at least iris-containing area in the eye image from the eye position and the eyelid position, and selectively performs the image process.

7.  The authentication device according to claim 2, wherein
    the display image formation unit forms a display image by subjecting the eye image to compression.

8.  The authentication device according to claim 5, wherein
    the display image formation unit forms a display image by subjecting the eye image to compression.

9.  The authentication device according to claim 7, wherein
    the compression is JPEG compression.

10. The authentication device according to claim 8, wherein
    the compression is JPEG compression.

**11.** The authentication device according to claim 2, wherein
the display image formation unit forms a display image by reducing the number of pixels composing the eye image.

**12.** The authentication device according to claim 5, wherein
the display image formation unit forms a display image by reducing the number of pixels composing the eye image.

**13.** The authentication device according to claim 2, wherein
the display image formation unit forms a display image by adding specified noise to the eye image.

**14.** The authentication device according to claim 5, wherein
the display image formation unit forms a display image by adding specified noise to the eye image.

**15.** The authentication device according to claim 2, wherein
the display image formation unit forms a display image by subjecting the eye image to at least two image processes
out of reducing the number of pixels composing the eye image, compressing the eye image, and adding specified
noise to the eye image.

**16.** The authentication device according to claim 5, wherein
the display image formation unit forms a display image by subjecting the eye image to at least two image processes
out of reducing the number of pixels composing the eye image, compressing the eye image, and adding specified
noise to the eye image.

**17.** The authentication device according to claim 5, wherein
the display image formation unit forms a display image by replacing the at least iris-containing area in the eye image
with a specified image.

**18.** The authentication device according to claim 2 further comprising:

an image quality determination unit for determining whether an eye image captured by the eye image pickup
unit is adequate in quality or not, wherein
the authentication information formation unit forms the authentication information of an eye image which has
been determined to be adequate in quality by the image quality determination unit.

**19.** An authentication device comprising:

an eye image pickup unit for capturing an eye image of a user to be authenticated;
an authentication information formation unit for forming authentication information of the eye image of the user;
an authentication information registration unit for registering the authentication information as registered authentication information;
authentication unit for authenticating the user by comparing and collating the authentication information with
registered authentication information which has been registered previously;
display image formation unit for forming a display image by degrading an at least iris-containing area in the eye
image; and
a display unit for displaying the display image, wherein
the display image formation unit forms the display image and makes the display unit display the display image
at least one of when the user is guided and when the authentication information registration unit registers the
authentication information as the registered authentication information.

**20.** An image processing method comprising:

a first step of cutting out an at least iris-containing area from an eye image; and
a second step of selectively degrading an image of the iris-containing area cut out in the first step.

**21.** A program for making a computer execute:

a first step of cutting out an at least iris-containing area from an eye image; and
a second step of selectively degrading an image of the iris-containing area cut out in the first step.

# FIG. 1

EP 1 703 463 A1

## FIG. 2

# FIG. 3

START

Entering an eye image — S1

Forming a display image — S2

Displaying the image — S3

Guide completion — S4

Any instruction? — S5
N
Y

Determining the quality of the image — S6

Adequate image quality? — S7
N
Y

Authentication or registration — S8

END

# FIG. 4

51

**FIG. 5**

52

**FIG. 6**

53

**FIG. 7**

54

# FIG. 8

50

44

41

41

43

42

40

FIG. 9

EP 1 703 463 A1

## FIG. 10

EP 1 703 463 A1

# FIG. 11

START

Entering an eye image — S10

Determining the quality of the image — S11

Adequate image quality? — S12

N

Y

Forming authentication information — S13

Forming a display image — S14

Displaying the image — S15

S16

Registration permission

Permitted? — S17

N

Y

Registration — S18

END

# FIG. 12

62 Image pickup unit — Image

3 Image quality determination unit

4 Eye position detection unit

5 Eyelid position detection unit

6 Polar conversion unit

7 Encoding unit

8 Collation unit → Authentication result

9 Storage unit

20 Registration unit

71 Display image formation unit

72 Display unit → Image

13 Input unit

75 Authentication device

60 Authentication system

FIG. 13

91

FIG. 14

92

FIG. 15

93

# FIG. 16

Eye image → Image pickup unit (82)

Image quality determination unit (3) → Eye position detection unit (4) → Eyelid position detection unit (5)

Polar conversion unit (6)

Encoding unit (7) → Collation unit (8) → Authentication result

Registration unit (20) → Storage unit (9)

Display image formation unit (81)

Display unit (83) → Images for the guiding and for the checking

Input unit (84)

85 Authentication system

EP 1 703 463 A1

# FIG. 17

Authentication result

82 Image pickup unit

Eye image →

3 Image quality determination unit

4 Eye position detection unit

5 Eyelid position detection unit

6 Polar conversion unit

7 Encoding unit

8 Collation unit

20 Registration unit

9 Storage unit

Images for the guiding and for the checking

83 Display unit

94 Display image formation unit

84 Input unit

88 Authentication system

EP 1 703 463 A1

Reference numerals in the drawings

1, 61, 75    Authentication device

2, 62, 82    Image pickup unit

3    Image quality determination unit

4    Eye position detection unit

5    Eyelid position detection unit

6    Polar conversion unit

7    Encoding unit

8    Collation unit

9    Storage unit

10, 20    Registration unit

11, 31, 71, 81, 94    Display image formation unit

12, 72, 83    Display unit

13, 84    Input unit

21    User to be authenticated

22, 63    Information transmitter

23    Administrator

30, 60, 70, 85, 88    Authentication system

40    Mobile phone device

41    LED

42    Direct key

43    CCD camera

44    Liquid crystal display

50-54, 80, 91-93    Display image

64    Registration control device

65    Eye position guide unit

66    Mirror guide unit

67    Movement instruction unit

EP 1 703 463 A1

## INTERNATIONAL SEARCH REPORT

| | International application No. |
|---|---|
| | PCT/JP2004/016522 |

**A. CLASSIFICATION OF SUBJECT MATTER**
Int.Cl⁷ G06T7/00

According to International Patent Classification (IPC) or to both national classification and IPC

**B. FIELDS SEARCHED**

Minimum documentation searched (classification system followed by classification symbols)
Int.Cl⁷ G06T7/00-7/60, G06T1/00

Documentation searched other than minimum documentation to the extent that such documents are included in the fields searched
Jitsuyo Shinan Koho          1922–1996   Jitsuyo Shinan Toroku Koho   1996–2003
Kokai Jitsuyo Shinan Koho    1971–2003   Toroku Jitsuyo Shinan Koho   1994–2003

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2000-207536 A   (Oki Electric Industry Co., Ltd.), 28 July, 2000 (28.07.00), Full text; all drawings (Family: none) | 1-21 |
| Y | JP 62-266970 A   (Matsushita Graphic Communication Systems,Inc), 19 November, 1987 (19.11.87), Page 1 (Family: none) | 1-21 |
| Y | JP 3307936 B2   (Iri Scan Inc.), 17 May, 2002 (17.05.02), Full text; all drawings & EP 000664037 A          & US 005291560 A | 6 |

[×] Further documents are listed in the continuation of Box C.          [ ] See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 December, 2004 (01.12.04) | 21 December, 2004 (21.12.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

| INTERNATIONAL SEARCH REPORT | International application No. |
|---|---|
| | PCT/JP2004/016522 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2000-201272 A  (Canon Inc.),<br>18 July, 2000 (18.07.00),<br>Full text; all drawings<br>(Family: none) | 1-21 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3307936 B
- JP 2000207536 A